# EUROPÄISCHE PATENTSCHRIFT

(11) **EP 2 673 505 B1**
(45) Veröffentlichungstag und Bekanntmachung des Hinweises auf die Patenterteilung: **14.10.2015**
(21) Anmeldenummer: 12705050.8
(22) Anmeldetag: 06.02.2012
(51) Int. Cl.: F03D 11/04

(54) **TURM FÜR EINE WINDKRAFTANLAGE**
TOWER FOR A WIND TURBINE
MÂT POUR ÉOLIENNE

(30) Priorität: 07.02.2011 DE 102011010417
(43) Veröffentlichungstag der Anmeldung: 18.12.2013
(73) Patentinhaber: Nordex SE, 22419 Hamburg (DE)
(72) Erfinder: RITSCHEL, Uwe, 18230 Zweedorf (DE)
(74) Vertreter: Wetzel, Philipp
(86) Internationale Anmeldenummer: PCT/EP2012/000520
(87) Internationale Veröffentlichungsnummer: WO 2012/107196

(56) Entgegenhaltungen:
- EP-A1- 1 150 010
- EP-A1- 2 189 657
- DE-A1- 10 309 825
- DE-A1- 10 357 392

## Beschreibung

Die Erfindung betrifft einen Turm für eine Windkraftanlage mit einem Basisabschnitt als Bestandteil des Turms, einem mit dem Basisabschnitt verbundenen Fundament und mit einer außerhalb des Turms angeordneten turmnahen Abspannung, die mit dem Fundament so verbunden ist, dass auf den Turm wirkende Biege- und Torsionsmomente wenigstens teilweise als Zugkräfte in das Fundament eingeleitet werden, wobei die Abspannung ein außerhalb des Basisabschnitts angeordnetes Kraftübertragungselement zwischen Fundament und Turm aufweist.

Windkraftanlagen der Eingangs beschriebenen Art sind aus JP 2002-122066A, EP 2 189 657 A1 und DE 103 57 392 A1 bekannt.

Bei einer Windkraftanlage handelt es sich um eine Vorrichtung zur Erzeugung von elektrischer Energie. Moderne Windkraftanlagen bestehen aus einem Rotor, einem Maschinenhaus und einem Turm. Der Rotor weist dabei eine horizontale oder zur Horizontalen leicht geneigte Rotorachse auf. Der Turm dient dazu, den Rotor in eine Höhe zu heben, in der stärkere und gleichmäßige Winde herrschen, um mehr elektrische Energie zu erzeugen und die Lasten zu reduzieren. Türme von 100 m oder mehr sind heute Stand der Technik. Dabei kommen unterschiedliche Arten von Türmen zum Einsatz. Hierbei handelt es sich beispielsweise um Rohr-, Gitter- und Betontürme. Mit Abstand die meisten Windkraftanlagen werden mit Stahlrohrtürmen errichtet. Die Gründe hierfür sind einfache strukturelle Eigenschaften der Rohrtürme, hohe Torsionssteifigkeit und ästhetische Gründe.

Aufgrund der inzwischen hohen Höhen der Türme der Windkraftanlagen haben sich reine Rohrtürme als problematisch erwiesen. Um die bei dem Betrieb der Windkraftanlage auftretenden Biegemomente am Turmfuß aufnehmen zu können, muss das Rohr des Rohrturms ausreichend dimensioniert sein. Hierbei hat es sich als vorteilhaft erwiesen, große Durchmesser einzusetzen, um bei relativ geringem Wandstärken Material einzusparen. Problematisch bei großen Durchmessern ist dabei, dass die Bestandteile des Rohrturms, beispielsweise auf öffentlichen Straßen, zum Errichtungsort transportiert werden müssen, so dass sich Transportbeschränkungen hinsichtlich der Größe ergeben. Hierbei noch transportierbare Durchmesser sind beispielsweise Werte im Bereich von 4 m. Aus diesem Grund sind bei Windkraftanlagen mit großen Rotordurchmessern und großen Nabenhöhen reine Stahltürme nicht mehr möglich bzw. unwirtschaftlich.

Hierbei eingebürgert hat sich der Einsatz sogenannter Hybridtürme, bei denen ein unterer Abschnitt aus Beton und ein oberer Abschnitt aus Stahl hergestellt wird. Der untere Abschnitt wird dabei aus Ortbeton oder Betonfertigteilen errichtet. Eine weitere Lösung dieses Bereiches sind reine Gittertürme bzw. Hybridtürme aus einem unteren Gitterabschnitt in einem oberen Rohrabschnitt oder reine Betontürme. Alle diese Türme weisen einen erheblichen Montage- und Materialaufwand auf.

Aufgabe der Erfindung ist es daher, einen aufgrund von Materialeinsparung wirtschaftlicheren Turm für eine Windkraftanlage bereit zu stellen.

Erfindungsgemäß wird die Aufgabe dadurch gelöst, dass die turmnahe Abspannung sich wenigstens zusammensetzt aus einem Kraftaufnahmeelement, das in einem vom Fundament abgewandten Bereich des Basisabschnitts angeordnet ist, einem Aufnahmeabschnitt des Fundaments und dem Kraftübertragungselement, wobei das Kraftaufnahmeelement des Basisabschnitts und der Aufnahmeabschnitt des Fundaments mit dem Kraftübertragungselement verbunden sind, sowie einem Kraftaufnahmeelement des Fundaments, und einem Kraftübertragungselement, wobei das Kraftaufnahmeelement mit dem Aufnahmeabschnitt des Fundaments über das Kraftübertragungselement verbunden ist und das Kraftübertragungselement des Fundaments innerhalb des Fundaments angeordnet ist, und/oder der Aufnahmeabschnitt auf dem Fundament angeordnet ist.

Auf diese Weise ist es möglich, die Wandstärken entsprechend anzupassen und zu reduzieren. Durch das Vorsehen der Kraftaufnahmeelemente am Basisabschnitt und am Fundament und dem Verbinden dieser Kraftaufnahmeelemente über Kraftübertragungselemente wird es möglich, die entsprechend wirkenden Biegemomente in Druckkräfte im Basisabschnitt des Turms umzuwidmen, so dass dort für den Einsatz von Beton vorteilhafte Druckkräfte auf den Beton wirken.

Dabei werden die auf den Turm wirkende Biege- und Torsionsmomente im Wesentlichen in Druckkräfte umgewandelt. Weiterhin bevorzugt besteht die turmnahe Abspannung aus drei oder mehr Abspannungselementen.

Eine weitere Lehre der Erfindung sieht vor, dass die Abspannung so ausgeführt ist, dass die strukturelle Dämpfung des Turms erhöht wird. Auch hierdurch kann eine Reduzierung der Wandstärke erreicht werden.

Eine weitere Lehre der Erfindung sieht vor, dass die Abspannung ein Kraftübertragungselement zwischen Fundament und Turm aufweist. Durch das Kraftübertragungselement wird es möglich, die entsprechende Kraftumwidmung auf einfache Weise bereit zu stellen.

Eine weitere Lehre der Erfindung sieht vor, dass das Kraftaufnahmeelement des Basisabschnitts ein nach außen über den Basisabschnitt überstehendes Stahlelement ist, das bevorzugt an der Oberseite des Basisabschnitts angeordnet ist, und dass besonders bevorzugt als Verbindungselement des Basisabschnitts aus Beton oder Stahl mit dem darüber angeordneten Rohrabschnitt aus Stahl dient.

Durch diese Ausführungsform des Kraftaufnahmeelements wird untere anderem eine besonders effiziente Krafteinleitung möglich, die gleichzeitig eine kostengünstige Verbindung der Abschnitte des Turms der Windkraftanlage ober- und unterhalb des Kraftelements, insbesondere beim Vorhandensein von Stahlabschnitt und Betonabschnitt, darstellt.

Eine weitere Lehre der Erfindung sieht vor, dass das Kraftübertragungselement, insbesondere das Kraftübertragungselement des Basisabschnitts ein Zuganker und/oder ein Seil ist, wobei es sich bei dem Seil bevorzugt um ein Stahlseil und/oder eine Stahllitze handelt. Durch diese Kraftübertragungselemente ist es auf kostengünstige Weise einfach möglich, die durch das Biegemoment wirkenden Zugkräfte zu übertragen.

Weiterhin bevorzugt ist das Kraftübertragungselement des Fundaments eine Bewehrung, ein Zuganker und/oder ein Seil, wobei es sich dabei bevorzugt um ein Stahlseil oder um eine Stahllitze handelt. Durch das Vorsehen des Kraftübertragungselements des Fundaments innerhalb des Fundaments ist zum einen eine geschützte Anordnung im Boden der Kraftübertragungselemente im Fundament möglich. Weiterhin stellen die entsprechenden Ausführungen der Kraftübertragungselemente im Fundament eine kostengünstige Variante zur Einleitung der Zugkräfte in das Fundament dar.

Eine weitere Lehre der Erfindung sieht vor, dass das Kraftaufnahmeelement des Fundaments ein Stahlelement ist, das bevorzugt an der Unterseite des Fundaments, bevorzugt im Fundament, angeordnet ist. Weiterhin vorteilhaft ist, wenn das Stahlelement im Wesentlichen den gleichen Durchmesser wie das Kraftaufnahmeelement des Basisabschnitts aufweist. Hierdurch wird eine direkte Krafteinleitung in den Basisabschnitt möglich.

Eine weitere Lehre der Erfindung sieht vor, dass das Aufnahmeelement als Verbindungselement zwischen den beiden Kraftübertragungselementen in einem Abschnitt zwischen der Außenseite des Fundaments bis zur Hälfte des Radius des Fundaments angeordnet ist. Auf diese Weise wird ein günstiger Krafteinleitungswinkel bereit gestellt.

Eine weitere Lehre der Erfindung sieht vor, dass der Basisabschnitt sich bis in das Fundament erstreckt, und dass das Kraftaufnahmeelement an der Unterseite des Basisabschnitts im Fundament angeordnet ist.

Weiterhin wird die erfindungsgemäße Aufgabe durch eine Windkraftanlage mit einem zuvor beschriebenen Turm gelöst.

Insgesamt gesehen bewirkt der zuvor beschriebene Turm in seinen unterschiedlichen Ausführungsformen, dass der zylindrische Rohrturmabschnitt von Biegemomenten und Scherkräften weitgehend entlastet wird, und der Rohrturm so vergleichsweise leicht ausgeführt werden kann, wodurch Materialeinsparungen bei gleichbleibenden Errichtungshöhen bewirkt werden.

Nachfolgend wird die Erfindung an Hand eines bevorzugten Ausführungsbeispiels in Verbindung mit einer Zeichnung näher erläutert. Dabei zeigen:
- Fig. 1: eine räumliche Ansicht eines erfindungsgemäßen Turms einer Windkraftanlage,
- Fig. 2: eine Seitenansicht zu Fig. 1,
- Fig. 3: eine Detailansicht des erfindungsgemäßen Basisabschnitts nebst Fundamentseitenansicht,
- Fig. 4: eine Draufsicht zu Fig. 3,
- Fig. 5: eine Schnittansicht AA zu Fig. 4,
- Fig. 6: eine Detailansicht B zu Fig. 5,
- Fig. 7: eine Detailansicht C zu Fig. 5,
- Fig. 8: eine Detailansicht D zu Fig. 5,
- Fig. 9: eine Detailansicht E zu Fig. 5, und
- Fig. 10: eine isometrische räumliche Ansicht zu Fig. 3.

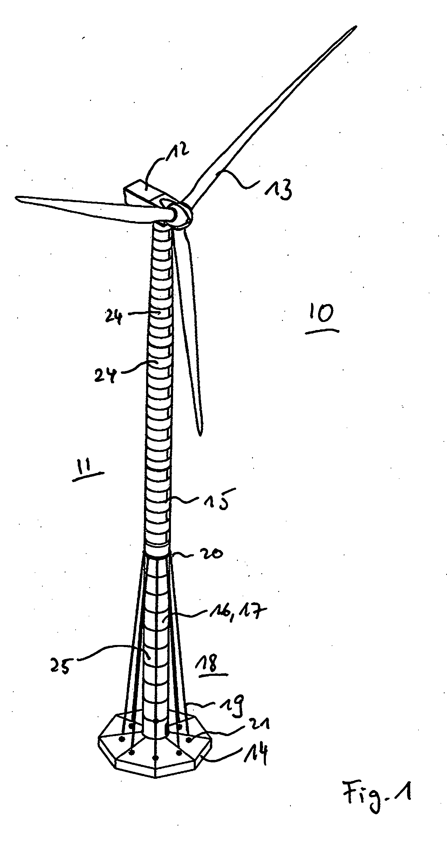

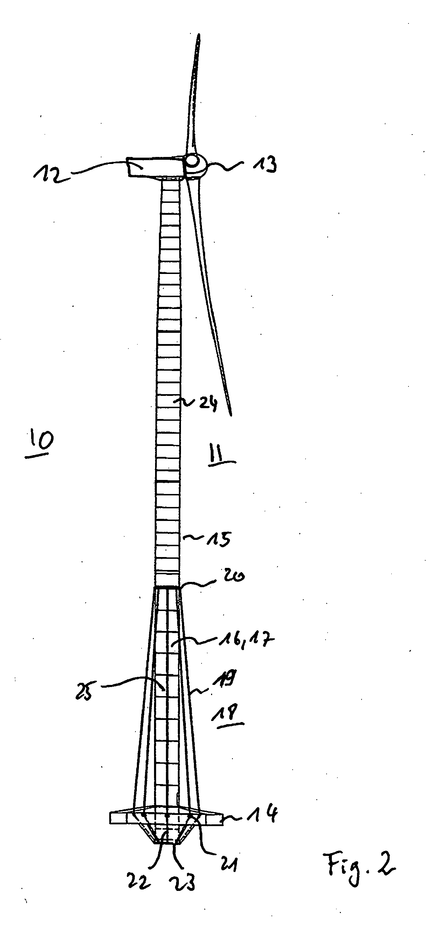

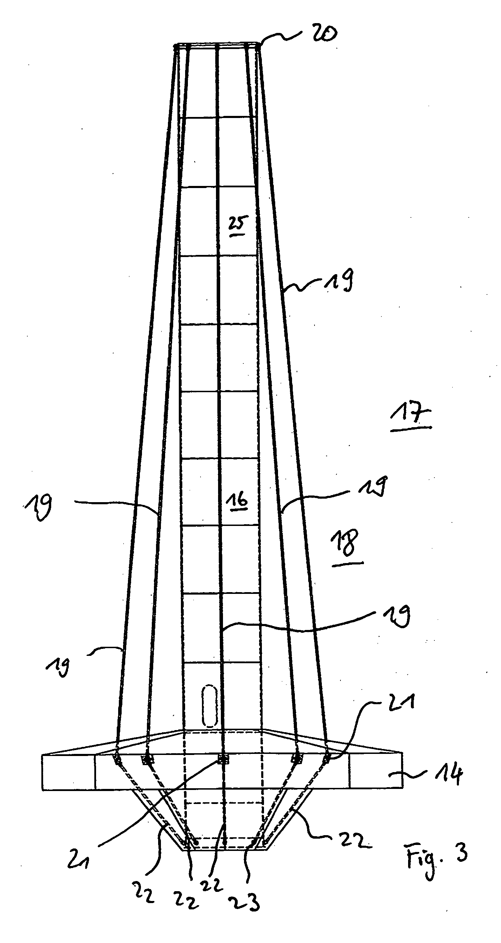

Fig. 1 zeigt eine räumliche Ansicht einer Windkraftanlage 10. Die Windkraftanlage 10 weist einen Turn - 11 auf. An der Oberseite des Turms 11 befindet sich eine Gondel 12 mit einem Maschinenhaus und einen an die Gondel 12 angebrachten Rotor 13. Der Turm 11 steht auf einem Fundament 14. Bei dem Fundament 14 handelt es sich um ein Plattenfundament. Der Turm 11 ist in einen Rohrturmabschnitt 15 und einem Betonabschnitt 16 unterteilt. Der Betonabschnitt 16 stellt den Basisabschnitt 17 dar. Der Rohrturmabschnitt 15 besteht aus einzelnen Stahlsegmenten als Abschnitte 24, die entweder als Vollringe oder als Teilabschnitte eines Ringes ausgeführt und zusammengesetzt sein können. Der Betonabschnitt 16 ist aus einzelnen Betonsegmenten als Abschnitte 25 vorgesehen. Zwischen dem Betonabschnitt 16 und dem Rohrturmabschnitt 15 ist ein Kraftaufnahmeelement 20 angeordnet. Das Kraftaufnahmeelement 20 ist mit Kraftübertragungselementen 19, die als Stahlseile ausgeführt sind, mit einem Aufnahmeabschnitt 21 auf dem Fundament 14 verbunden. Innerhalb des Fundamentes 14 ist an dessen Unterseite ein weiteres Kraftaufnahmeelement 23 angeordnet, das im Wesentlichen den gleichen Durchmesser wie das Kraftaufnahmeelement 20 aufweist. Der Durchmesser ist normalerweise ein wenig größer bei dem Kraftaufnahmeelement 23, wenn die einzelnen Abschnitte 25 des Basisabschnitts 17 konisch ausgeführt sind. Das Kraftaufnahmeelement 23 ist über Kraftübertragungselemente 22, die im Fundament 14 vorgesehen sind, mit dem Aufnahmeabschnitt 21 verbunden. (Siehe Fig. 2 und Fig. 3). Das Kraftaufnahmeelement 20, die Kraftübertragungselemente 19, die damit verbundenen Aufnahmeabschnitte 21, die damit verbundenen Kraftübertragungselemente 22 und das Kraftaufnahmeelement 23 bilden zusammen eine Abspannung 18.

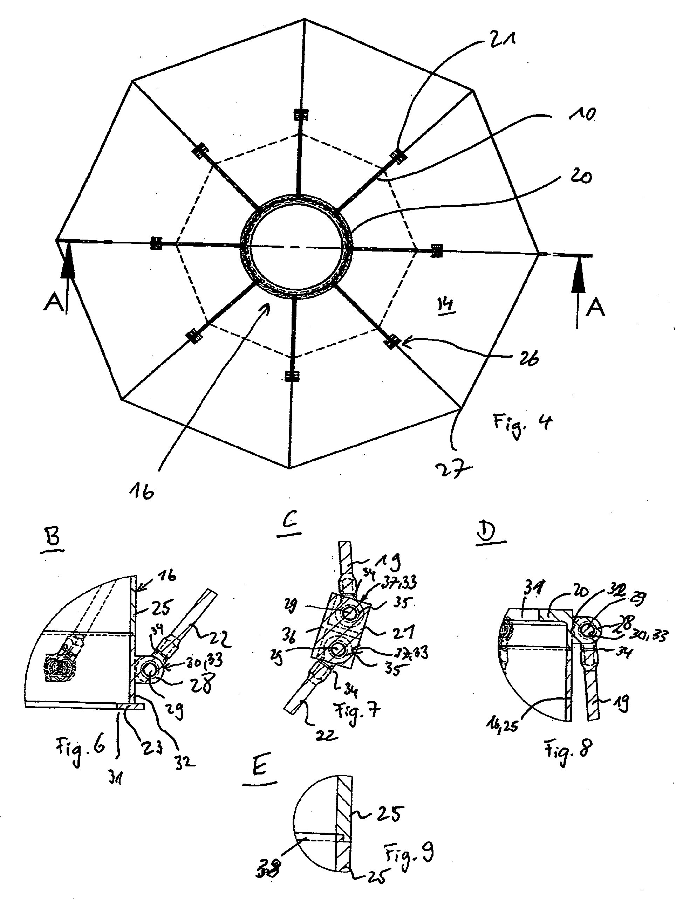

Die Aufnahmeabschnitte 21 sind als Ansatzpunkte 26 auf dem Fundament 14 angeordnet. (Siehe Fig. 4). Der Ansatzpunkt 26 befindet sich dabei zwischen der Außenseite 27 des Fundamentes 14 und der Hälfte des Radius des Fundaments umhüllenden Aüßenkreises des Fundaments 14.

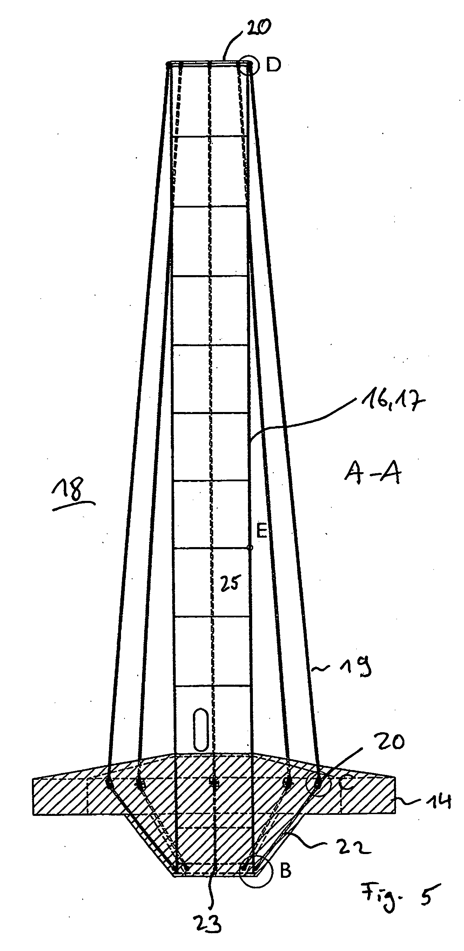

Fig. 6 bis Fig. 9 zeigen Teilansichten zu Fig. 5. Fig. 6 zeigt dabei das Detail B. Das Detail B stellt das Kraftaufnahmeelement 23 im Fundament 14 dar. Die Betonbestandteile des Fundaments 14 sind dabei weggelassen. Diese Ausführungsvariante ist ebenfalls möglich. Das Kraftaufnahmeelement 23 umfasst einen Basisteil 31 und eine Seitenwand 32. An der Seitenwand 32 ist ein Verbindungselement 28 angeordnet, das ein Auge 30 umfasst. Mit dem Verbindungselement 28 ist das Kraftübertragungselement 22 verbunden. Über eine Verbindung 34 ist an das Kraftübertragungselement 22 ein Auge 33 angebracht. Das Auge 33 ist mit dem Auge 30 des Verbindungselementes 28 über einen Bolzen 29 verbunden.

Fig. 7 zeigte ein Detail des erfindungsgemäßen Aufnahmeabschnittes ebenfalls ohne den Beton des Fundaments 14. Der Aufnahmeabschnitt 21 umfasst ein Gehäuse 36, das an seiner Ober- und Unterseite offen ausgeführt ist. Es umfasst einen Verbindungsabschnitt 35, der ein Auge 37 aufweist. In das Gehäuse 36 treten ein das Kraftübertragungselement 19 und das Kraftübertragungselement 22. Die Kraftübertragungselemente weisen an ihren Endseiten jeweils eine Verbindung 34 mit einem Verbindungsteil auf, das ein Auge 33 umfasst. Das Auge 33 und das Auge 37 sind über einen Bolzen 29 miteinander verbunden.

Fig. 8 zeigt eine Detaildarstellung eines erfindungsgemäßen Kraftaufnahmeelements 20. Das Kraftaufnahmeelement 20 umfasst ein Basisteil 31 und eine Seitenwand 32. An der Seitenwand 32 sind Verbindungselemente 28 angeordnet, die jeweils ein Auge 30 aufweisen. Das Kraftübertragungselement 29 weist an seiner Außenseite über eine Verbindung 34 ein Auge 33 auf. Das Auge 30 und das Auge 33 sind über einen Bolzen 29 miteinander verbunden. Sowohl beim Kraftaufnahmeelement 20 als auch beim Kraftaufnahmeelement 23 schließen an die Seitenwand 32 Abschnitte 25 des Betonabschnitts 16 an. Die Verbindung der Betonabschnitte 25, ggf. mit Aussteifungselement 38, ist in Fig. 9 dargestellt.

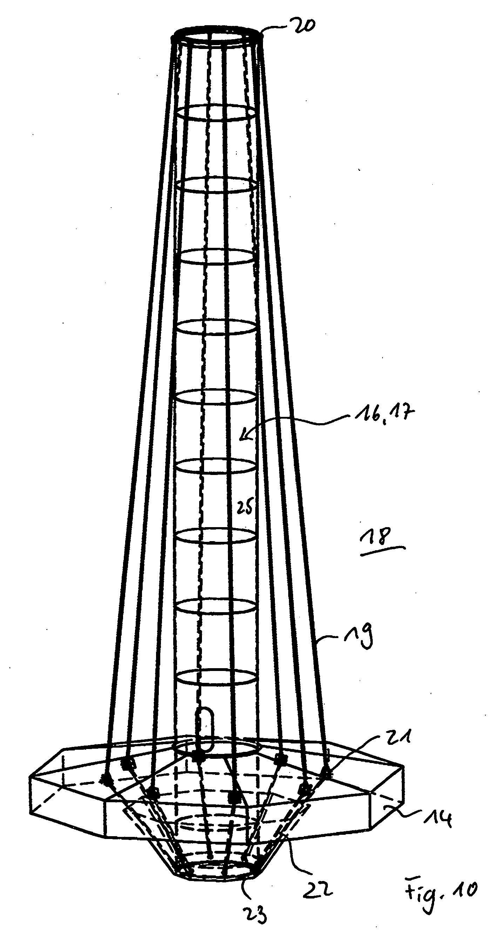

Fig. 10 zeigt eine isometrische Strichansicht zu Fig. 3 in räumlicher Ausführung. Nach dem Verbinden der Abspannungselemente 18 miteinander werden die Kraftübertragungselemente 22 und 19 über die Verbindung 34 mit geeigneten Mitteln gespannt. Nachdem das Fundament 14 mit dem Basisabschnitt 16 und der Abspannung 18, die entsprechend den notwendigen Zugspannungswerten gespannt ist, errichtet wurde, wird der Rohrabschnitt 15 des Turms 11 auf dem Betonabschnitt 16 errichtet. Anschließend kann die Gondel 12 und der Rotor 13 auf den Turm 11 errichtet werden.

## Patentansprüche

1. Turm für eine Windkraftanlage mit einem Basisabschnitt (16) als Bestandteil des Turms (11), einem mit dem Basisabschnitt (16) verbundenen Fundament (14) und mit einer außerhalb des Turms angeordneten turmnahen Abspannung (18), die mit dem Fundament (14) so verbunden ist, dass auf den Turm (11) wirkende Biege- und Torsionsmomente wenigstens teilweise als Zugkräfte in das Fundament (14) eingeleitet werden, wobei die Abspannung (18) ein außerhalb des Basisabschnitts (16) angeordnetes Kraftübertragungselement (19) zwischen Fundament (14) und Turm (15) aufweist, wobei die turmnahe Abspannung sich wenigstens zusammensetzt aus einem Kraftaufnahmeelement (20), das in einem vom Fundament (14) abgewandten Bereich des Basisabschnitts (16) angeordnet ist, einem Aufnahmeabschnitt (21) des Fundaments (14) und dem Kraftübertragungselement (19), wobei das Kraftaufnahmeelement (20) des Basisabschnitts (16) und der Aufnahmeabschnitt (21) des Fundaments (14) mit dem Kraftübertragungselement (19) verbunden sind, sowie einem Kraftaufnahmeelement (23) des Fundaments (14), und einem Kraftübertragungselement (22), wobei das Kraftaufnahmeelement (23) mit dem Aufnahmeabschnitt (21) des Fundaments (14) über das Kraftübertragungselement (22) verbunden ist, **dadurch gekennzeichnet, dass** das Kraftübertragungselement (22) innerhalb des Fundaments (14) angeordnet ist, und/oder dass der Aufnahmeabschnitt (21) auf dem Fundament (14) angeordnet ist.

2. Turm nach Anspruch 1, **dadurch gekennzeichnet, dass** die Abspannung (18) so ausgeführt ist, dass die strukturelle Dämpfung des Turms (11) erhöht wird.

3. Turm nach Anspruch 1 oder 2, **dadurch gekennzeichnet, dass** das Kraftaufnahmeelement (20) des Basisabschnitts (16) ein nach außen über den Basisabschnitt (16) überstehendes Stahlelement ist, das bevorzugt an der Oberseite des Basisabschnitts (16) angeordnet ist.

4. Turm nach einem der Ansprüche 1 bis 3, dass das Kraftübertragungselement (19) des Basisabschnitts (16) ein Zuganker, ein Seil, bevorzugt ein Stahlseil und/oder eine Stahllitze ist.

5. Turm nach einem der Ansprüche 1 bis 4, **dadurch gekennzeichnet, dass** das Kraftübertragungselement (22) des Fundaments (14) eine Bewehrung, ein Zuganker, ein Seil, bevorzugt ein Stahlseil und/oder eine Stahllitze ist.

6. Turm nach einem der Ansprüche 1 bis 5, **dadurch gekennzeichnet, dass** das Kraftaufnahmeelement (23) des Fundaments (14) ein Stahlelement ist, das bevorzugt an der Unterseite des Fundaments (14) angeordnet ist.

7. Turm nach einem der Ansprüche 1 bis 6, **dadurch gekennzeichnet, dass** das Kraftaufnahmeelement (23) des Fundaments (14) im Wesentlichen den gleichen Durchmesser wie das Kraftaufnahmeelement (20) des Basisabschnitts (16) aufweist.

8. Turm nach einem der Ansprüche 1 bis 7, **dadurch gekennzeichnet, dass** der Aufnahmeabschnitt (21) in einem Abschnitt zwischen der Außenseite (27) des Fundaments (14) und der Hälfte des Radius des Fundaments (14) angeordnet ist.

9. Turm nach einem der Ansprüche 1 bis 8, **dadurch gekennzeichnet, dass** der Basisabschnitt (16) sich bis in das Fundament (14) erstreckt, und dass das Kraftaufnahmeelement (23) an der Unterseite des Basisabschnitts (16) im Fundament (14) angeordnet ist.

## Claims

1. Tower for a wind turbine comprising a base section (16) as a constituent part of the tower (11), a foundation (14) connected to the base section (16), and a tensioning (18) which is arranged outside of and close to the tower and which is connected to the foundation (14) in such a way that bending and torsion moments acting on the tower (11) are at least partly introduced as tensile forces into the foundation (14), wherein the tensioning (18) comprises a force-transmitting element (19) between the foundation (14) and the tower (15) that is arranged outside of the base section (16), wherein the tensioning close to the tower is at least composed of a force-absorbing element (20) which is arranged in a region of the base section (16) remote from the foundation (14), a receiving section (21) of the foundation (14), and the force-transmitting element (19), wherein the force-absorbing element (20) of the base section (16) and the receiving section (21) of the foundation (14) are connected to the force-transmitting element (19), and a force-absorbing element (23) of the foundation (14), and a force-transmitting element (22), wherein the force-absorbing element (23) is connected to the receiving section (21) of the foundation (14) via the force-transmitting element (22), **characterized in that** the force-transmitting element (22) is arranged within the foundation (14), and/or **in that** the receiving section (21) is arranged on the foundation (14).

2. Tower according to Claim 1, **characterized in that** the tensioning (18) is configured in such a way that the structural damping of the tower (11) is increased.

3. Tower according to Claim 1 or 2, **characterized in that** the force-absorbing element (20) of the base section (16) is a steel element which projects outwardly beyond the base section (16) and which is preferably arranged on the upper side of the base section (16).

4. Tower according to one of Claims 1 to 3, **characterized in that** the force-transmitting element (19) of the base section (16) is a tie rod, a cable, preferably a steel cable and/or a steel braided wire.

5. Tower according to one of Claims 1 to 4, **characterized in that** the force-transmitting element (22) of the foundation (14) is a reinforcement, a tie rod, a cable, preferably a steel cable and/or a steel braided wire.

6. Tower according to one of Claims 1 to 5, **characterized in that** the force-absorbing element (23) of the foundation (14) is a steel element which is preferably arranged on the underside of the foundation (14).

7. Tower according to one of Claims 1 to 6, **characterized in that** the force-absorbing element (23) of the foundation (14) substantially has the same diameter as the force-absorbing element (20) of the base section (16).

8. Tower according to one of Claims 1 to 7, **characterized in that** the receiving section (21) is arranged in a section between the outer face (27) of the foundation (14) and half of the radius of the foundation (14).

9. Tower according to one of Claims 1 to 8, **characterized in that** the base section (16) extends right into the foundation (14), and **in that** the force-absorbing element (23) is arranged on the underside of the base section (16) in the foundation (14).

## Revendications

1. Mât pour éolienne avec une section de base (16) en tant que composant du mât (11), une fondation (14) reliée à la section de base (16) et un haubanage (18) proche du mât disposé à l'extérieur du mât, qui est relié à la fondation (14) de telle manière que des moments de flexion et de torsion agissant sur le mât (11) soient introduits dans la fondation (14) au moins en partie sous forme de forces de traction, dans lequel le haubanage (18) présente un élément de transmission de forces (19) entre la fondation (14) et le mât (11), disposé à l'extérieur de la section de base (16), dans lequel le haubanage proche du mât se compose au moins d'un élément de reprise de forces (20), qui est disposé dans une région de la section de base (16) située à l'opposé de la fondation (14), une section de logement (21) de la fondation (14) et l'élément de transmission de forces (19), dans lequel l'élément de reprise de forces (20) de la section de base (16) et la section de logement (21) de la fondation (14) sont reliés à l'élément de transmission de forces (19), ainsi qu'un élément de reprise de forces (23) de la fondation (14) et un élément de transmission de forces (22), dans lequel l'élément de reprise de forces (23) est relié à la section de logement (21) de la fondation (14) par l'élément de transmission de forces (22), **caractérisé en ce que** l'élément de transmission de forces (22) est disposé à l'intérieur de la fondation (14), et/ou **en ce que** la section de logement (21) est disposée sur la fondation (14).

2. Mât selon la revendication 1, **caractérisé en ce que** le haubanage (18) est réalisé de telle manière que l'amortissement structurel du mât (11) soit accru.

3. Mât selon la revendication 1 ou 2, **caractérisé en ce que** l'élément de reprise de forces (20) de la section de base (16) est un élément en acier saillant vers l'extérieur au-dessus de la section de base (16), qui est disposé de préférence sur le côté supérieur de la section de base (16).

4. Mât selon l'une quelconque des revendications 1 à 3, **caractérisé en ce que** l'élément de transmission de forces (19) de la section de base (16) est un tirant d'ancrage, un câble, de préférence un câble d'acier et/ou un toron d'acier.

5. Mât selon l'une quelconque des revendications 1 à 4, **caractérisé en ce que** l'élément de transmission de forces (22) de la fondation (14) est une armature, un tirant d'ancrage, un câble, de préférence un câble d'acier et/ou un toron d'acier.

6. Mât selon l'une quelconque des revendications 1 à 5, **caractérisé en ce que** l'élément de reprise de forces (23) de la fondation (14) est un élément en acier, qui est disposé de préférence sur le côté inférieur de la fondation (14).

7. Mât selon l'une quelconque des revendications 1 à 6, **caractérisé en ce que** l'élément de reprise de forces (23) de la fondation (14) présente essentiellement le même diamètre que l'élément de reprise de forces (20) de la section de base (16).

8. Mât selon l'une quelconque des revendications 1 à 7, **caractérisé en ce que** la section de logement (21) est disposée dans une partie entre le côté extérieur (27) de la fondation (14) et la moitié du rayon de la fondation (14).

9. Mât selon l'une quelconque des revendications 1 à 8, **caractérisé en ce que** la section de base (16) s'étend jusque dans la fondation (14), et **en ce que** l'élément de reprise de forces (23) est disposé dans la fondation (14) sur le côté inférieur de la section de base (16).
